# EUROPÄISCHE PATENTANMELDUNG

(11) **EP 2 808 501 A1**
(43) Veröffentlichungstag der Anmeldung: **03.12.2014**
(21) Anmeldenummer: 13169386.3
(22) Anmeldetag: 27.05.2013
(51) Int. Cl.: F01K 23/10, F02C 6/18, F22B 1/18, F22B 35/02

(54) **Verfahren zum Betreiben einer GuD-Kraftwerksanlage**

(71) Anmelder: Siemens Aktiengesellschaft, 80333 München (DE)
(72) Erfinder: Migl, Matthias, 80997 München (DE); Pieper, Norbert, 47178 Duisburg (DE)

(57) **Zusammenfassung**

Die Erfindung betrifft ein Verfahren zum Betreiben einer GuD-Anlage (1), wobei im Abhitzekessel (11) zusätzliche Brenner (15, 16) angeordnet werden, wobei diese Brenner (15, 16) mit der Sekundärluft aus der Gasturbine (3) versorgt werden.

## Beschreibung

Die Erfindung betrifft eine Anlage umfassend einen Abhitzekessel sowie ein Verfahren zum Betreiben einer GuD-Kraftwerksanlage.

Neben reinen Dampfkraftwerksanlagen werden Gas- und Dampfturbinen-Anlagen (GuD-Anlagen) zur Erzeugung von elektrischer Energie eingesetzt. Bei GuD-Anlagen wird sowohl eine Gasturbine als auch eine Dampfturbine als Rotationsmaschine eingesetzt, die einen (bei Einwellenanlagen) oder mehrere (bei Mehrwellenanlagen) Generatoren antreiben.

Des Weiteren zeichnen sich die GuD-Anlagen dadurch aus, dass zur Erzeugung von Dampf für die Dampfturbine die thermische Energie am Ausgang der Gasturbine verwendet wird.

GuD-Anlagen mit einer Gasturbine, insbesondere mehrerer Gasturbinen und einer Dampfturbine werden üblicherweise in einem Lastbereich zwischen 25% und 100% der Nennleistung betrieben. Je geringer die Leistung ist, mit der die Gasturbine betrieben wird, umso kleiner ist auch die thermische Energie am Ausgang der Gasturbine, was sich nachteilig auf die Erzeugung des Dampfes für die Dampfturbine auswirkt. Unterhalb von 50% der Nennleistung wird eine Gasturbine mit dem zugehörigen Abhitzekessel üblicherweise abgestellt. Um die Gasturbine in niedrigen Lasten, insbesondere Park-Lasten fahren zu können, ist dies lediglich dann möglich, wenn das Verhältnis zwischen dem der Gasturbine zuzuführenden Brennstoff und der für den Brennstoff benötigten Luft reduziert wird. Allerdings führt dies zu niedrigeren Gasturbinen-Abgastemperaturen und somit zu geringeren Temperaturen des Dampfes für die Dampfturbine. Folgedessen würden die dickwandigen Bauteile der Dampfturbine abkühlen, was zur Folge hat, dass bei einer anschließenden nachfolgenden Lastaufnahme die Zeit verlängert werden würde.

Weiterhin würden aufgrund der dann niedrigeren Verbrennungstemperaturen in der Gasturbine die Kohlendioxid-Werte (CO-Werte) stark ansteigen.

Neben der Erzeugung von elektrischer Energie mit entsprechender Wirkleistung wird es für konventionelle Kraftwerke, wie z.B. GuD-Anlagen, zunehmend wichtiger, weitere Eigenschaften aufzuweisen. So ist es wichtig, dass solche GuD-Anlagen über eine Leistungsreserve zur Frequenzhaltung verfügen. Des Weiteren sollten die GuD-Anlagen über die Möglichkeit zur Erzeugung einer ausreichenden Blindleistung zur Spannungshaltung im Netz sowie über rotierende Massen zur Dämpfung von Frequenz-Abweichungen im elektrischen Netz verfügen. Neben den konventionellen Kraftwerken existieren Anlagen zur Erzeugung von elektrischer Energie, die mit regenerativer Energie betrieben werden. Dies wären z.B. Windkraftanlagen oder Photovoltaikanlagen. Allerdings können solche Anlagen die vorgenannten Eigenschaften nicht erfüllen. Es ist jedoch davon auszugehen, dass die Bereitstellung von Leistungsreserven und Blindleistung prinzipiell auch mit diesen Anlagen möglich sein könnte. Die dämpfende Wirkung rotierender Massen auf die Regelaufgabe bzw. zur Frequenzregelung kann im Grunde nur von Turbinen wie z.B. einer Gasturbine oder einer Dampfturbine erfüllt werden. Hierfür eignen sich Dampfturbinen insbesondere. Das liegt daran, dass die Rotoren von Dampfturbinen ein hohes Massenträgheitsmoment aufweisen und andererseits daran, dass die Leistung von Dampfturbinen in einem bestimmten Wertebereich nahezu unabhängig von der Drehzahl ist. Im Gegensatz hierzu ist die Leistung einer Gasturbine bei höheren Drehzahlen ebenfalls höher.

Es ist daher von Vorteil, wenn die Dampfturbine in einer GuD-Anlage im Betrieb bei einer minimalen Last am Netz gehalten wird. Dies wäre z.B. dann der Fall, wenn die Stromnachfrage gering ist oder große Mengen aus regenerativen Quellen zur Verfügung stehen.

Allerdings werden derzeit beispielsweise in Deutschland die meisten GuD-Anlagen nachts abgefahren und am nächsten Morgen über einen Heißstart wieder zugeschaltet. Alternativ hierzu wird die Gasturbine auf eine Minimal-Leistung heruntergefahren und dabei der Abhitzekessel und die Dampfturbine kalt gefahren, was zu erhöhten Lebensdauerverbräuchen an den dickwandigen Bauteilen des Abhitzekessels und der Dampfturbine führt. Die minimale Leistung, bei der eine solche GuD-Anlage betrieben werden kann, wird begrenzt durch den erlaubten Grenzwert für die CO-Emission.

Aufgabe der Erfindung ist es eine Anlage anzugeben, mit der eine bessere Fahrweise möglich ist.

Die Aufgabe wird gelöst durch eine Anlage umfassend einen Abhitzekessel, wobei innerhalb des Abhitzekessels Zusatz-Brenner zur Erzeugung von thermischer Energie angeordnet sind.

Des Weiteren wird die Aufgabe gelöst durch ein Verfahren zum Betreiben einer GuD-Anlage, wobei im Abhitzekessel ein zusätzlicher Brenner angeordnet wird und dieser mit Sekundärluft aus der Gasturbine versorgt wird.

Somit wird erfindungsgemäß vorgeschlagen, dass die Dampfturbine und mindestens ein Abhitzekessel bei minimaler Last heiß gehalten werden. Dabei befindet sich die Gasturbine nicht im Lastbereich, sondern stellt über den Verdichterteil den erforderlichen Luftmassenstrom zur Verfügung. Bei GuD-Anlagen mit zwei Gasturbinen stellt mindestens eine der beiden Gasturbinen über den Verdichterteil den erforderlichen Luftmassenstrom zur Verfügung. Der Antrieb der Gasturbine erfolgt bei einer reduzierten Drehzahl, wobei der Anfahr-Umrichter den Rotor der Gasturbine antreibt.

Vorteilhafte Weiterbildungen sind in den Unteransprüchen angegeben.

In einer vorteilhaften Weiterbildung umfasst die Anlage eine Dampfturbine, die mit Dampf vom Abhitzekessel beströmbar ist, wobei der Abhitzekessel eine Hochdrucktrommel aufweist und hinter der Hochdrucktrommel ein Hochdruck-Druckhalteventil angeordnet ist. Dementsprechend stellt eine vorteilhafte Weiterbildung der Anlage eine Mitteldrucktrommel dar, die im Abhitzekessel angeordnet ist und hinter der Mitteldrucktrommel ein Mitteldruck-Druckhalteventil angeordnet ist.

Die benötigte Sekundärluft für die Brenner wird im Abhitzekessel zugeführt. Die Gasturbine sollte dabei auf einer Drehzahl gehalten werden, die in etwa dem Luftmassenstrom entspricht, der für den Betrieb der Brenner benötigt wird.

Der Brennstoff wird in den im Abhitzekessel angeordneten Zusatz-Brennern zugeführt. Über das Brennstoff-Luft-Verhältnis wird die Gastemperatur so geregelt, dass auf der Dampfseite nahezu Nenntemperaturen erreicht werden.

Die Turbinenventile unmittelbar vor der Dampfturbine sollen hierbei voll geöffnet sein. Über die zusätzlichen Ventile, die hinter den Dampftrommeln angeordnet sind, soll der Druck in den Verdampfern auf ein Festdruck, der beispielsweise bei 60% des Nenndrucks liegen kann, der auch zwischen 40% bis 100% des Festdrucks liegen kann, gehalten werden.

Vorteilhafterweise kann die Dampfturbine somit bei einer minimalen Last von beispielsweise weniger als 10MW am Netz gehalten werden. Die dickwandigen Bauteile der Dampfturbine und des Abhitzekessels bleiben nahezu auf Nenntemperatur. Somit kann sehr schnell wieder Last aufgenommen werden.

Vorteilhafterweise wird die Gasturbine bei Drehzahlen von unter 30Hz betrieben.

Die Erfindung wird nun anhand eines Ausführungsbeispiels näher erläutert.

Die Figur zeigt in schematischer Weise eine erfindungsgemäße GuD-Anlage.

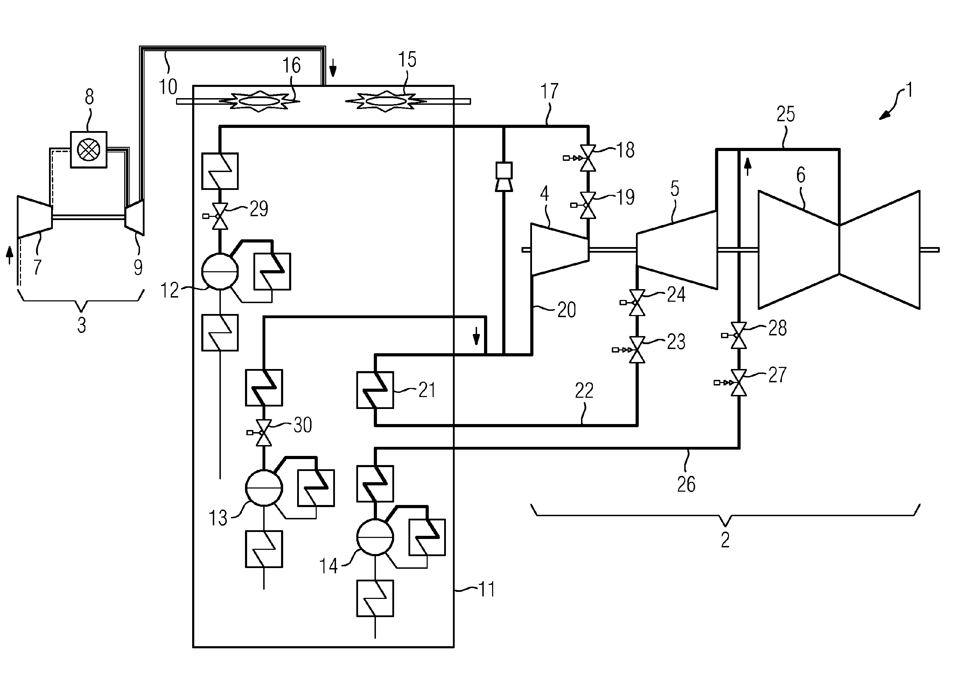

Figur 1 zeigt eine GuD-Anlage 1 umfassend eine Dampfturbine 2 und eine Gasturbine 3. Die Dampfturbine 2 umfasst hierbei eine Hochdruck-Teilturbine 4, eine Mitteldruck-Teilturbine 5 und eine zweiflutige Niederdruck-Teilturbine 6.

Die Gasturbine 3 umfasst einen Verdichterteil 7, ein Brennerteil 8 und ein Turbinenteil 9. Das heiße Abgas 10 der Gasturbine 3 gelangt in einen Abhitzekessel 11. Dieser Abhitzekessel 11 umfasst eine Hochdrucktrommel 12, eine Mitteldrucktrommel 13 und eine Niederdrucktrommel 14. Im Abhitzekessel 11 wird zumindest ein Zusatzbrenner 15 angeordnet. Der in der Figur dargestellte Abhitzekessel 11 umfasst neben dem Zusatz-brenner 15 einen weiteren Zusatzbrenner 16. Der Zusatzbrenner 15 und der Zusatzbrenner 16 sind zum Erzeugen von thermischer Energie ausgebildet und führen dazu, dass Dampf für die Dampfturbine 2 im Abhitzekessel 11 erzeugt wird.

Dazu wird eine Frischdampfleitung 17 angeordnet, in der Ventile 18 und 19 angeordnet sind und die Hochdruck-Teilturbine 4 mit Frischdampf versorgt. Der Dampf strömt aus der Hochdruck-Teilturbine 4 über eine Abdampfleitung 20 zu einem Zwischenüberhitzer 21. Zusätzlich wird die Abdampfleitung 20 mit der einer Mitteldrucktrommel 13 mit Dampf versorgt. Schließlich gelangt Dampf in die Mitteldruck-Teilturbine über eine Mitteldruckleitung 22 und über weitere Ventile 23 und 24. Am Ausgang der Mitteldruck-Teilturbine 5 gelangt der Dampf über eine Überströmleitung 25 zur Niederdruck-Teilturbine 6. Zusätzlich wird die Niederdruck-Teilturbine 6 mit der Niederdrucktrommel 14 im Abhitzekessel 11 mit Dampf versorgt. Des Weiteren sind am Ausgang der Niederdrucktrommel 14 in der Niederdrucktrommelleitung 26 weitere Ventile 27 und 28 angeordnet.

Die Gasturbine 3 ist derart ausgebildet, dass der für die Brenner 15, 16 erforderliche Luftmassenstrom von der Gasturbine 3 zuschaltbar ist. Dies erfolgt dadurch, dass die Gasturbine 3 ohne Brennstoffzufuhr betrieben wird und der Antrieb über einen Anfahr-Umrichter erfolgt (nicht gezeigt). Daher werden die Brenner 15, 16 mit Sekundärluft aus der Gasturbine 3 versorgt. Hinter der Hochdrucktrommel 12 ist ein Hochdruck-Druckhalteventil 29 angeordnet. Das Hochdruck-Druckhalteventil 29 wird hierbei derart betrieben, dass der Druck im Abhitzekessel 11 auf einen festen Druck, der bei 40% bis 100%, insbesondere 60% des Nenndrucks liegt, gehalten wird. Des Weiteren umfasst der Abhitzekessel 11 ein Mitteldruck-Druckhalteventil 30, wobei die Mitteldruck-Teilturbine 5 über die Mitteldrucktrommel 13 im Abhitzekessel 11 mit Mitteldruckdampf versorgt wird und hinter der Mitteldrucktrommel 13 ein Mitteldruck-Druckhalteventil 30 angeordnet wird, wobei das Mitteldruck-Druckhalteventil 30 derart betrieben wird, dass der Druck im Abhitzekessel 11 auf einen festen Druck, der bei 40% bis 100%, insbesondere 60% des Nenndrucks liegt, gehalten wird. Dabei ist vor der Hochdruck-Teilturbine 4 ein Hochdruckventil 18, 19 angeordnet, wobei dieses Ventil 18, 19 voll geöffnet wird. Vor der Mitteldruck-Teilturbine 5 sind die Ventile 24 und 23 angeordnet und diese bei dieser Fahrweise voll geöffnet.

Somit wird die Fahrweise dieser GuD-Anlage derart betrieben, dass die Gasturbine 3 nicht mit dem Netz synchronisiert werden muss, sondern als Luftzufuhr für die Brenner 15 und 16 ausgebildet sind. Weiterhin sorgen die Ventile 30 und 29 dafür, dass die Hochdrucktrommel 12 und die Mitteldrucktrommel 13 auf nahezu Nenndruck und somit auf nahezu Nenntemperatur gehalten werden können.

Somit kann die Möglichkeit geschaffen werden, minimale Parklast fahren zu können und dabei Netz-stabilisierende Eigenschaften aufrecht zu erhalten. Dies erfolgt beispielsweise durch Bereitstellung von Blindleistung oder durch Dämpfung durch rotierende Massen. Aus diesem Zustand heraus kann die Anlage 1 schneller auf Nennleistung gebracht werden. Insbesondere wenn die GuD-Anlage 1 für längere Zeit abgestellt werden müsste.

## Patentansprüche

1. Anlage (1)
umfassend
einen Abhitzekessel (11),
**dadurch gekennzeichnet,**
**dass** innerhalb des Abhitzekessels (11) Zusatz-Brenner (15, 16) zur Erzeugung von thermischer Energie angeordnet sind.

2. Anlage (1) nach Anspruch 1,
mit einer Gasturbine (3), wobei die Gasturbine (3) derart ausgebildet ist, dass der erforderliche Luftmassenstrom für den Zusatz-Brenner (15, 16) von der Gasturbine (3) zuschaltbar ist.

3. Anlage (1) nach Anspruch 1 oder 2,
mit einer Dampfturbine (2), die mit Dampf vom Abhitzekessel (11) beströmbar ist,
wobei der Abhitzekessel (11) eine Hochdrucktrommel (12) aufweist und hinter der Hochdrucktrommel (12) ein Hochdruck-Druckhalteventil (29) angeordnet ist.

4. Anlage (1) nach Anspruch 3,
wobei der Abhitzekessel (11) eine Mitteldrucktrommel (13) aufweist und hinter der Mitteldrucktrommel (13) ein Mitteldruck-Druckhalteventil (30) angeordnet ist.

5. Verfahren zum Betreiben einer GuD-Kraftwerksanlage (1), wobei im Abhitzekessel (11) ein zusätzlicher Brenner (15, 16) angeordnet wird und dieser mit Sekundärluft aus der Gasturbine (3) versorgt wird.

6. Verfahren nach Anspruch 5,
wobei die Gasturbine (3) ohne Brennstoffzufuhr betrieben wird und der Antrieb über einen Anfahr-Umrichter erfolgt.

7. Verfahren nach Anspruch 6,
wobei die Gasturbine (3) mit reduzierter Drehzahl betrieben wird.

8. Verfahren nach Anspruch 7,
wobei die Gasturbine (3) bei Drehzahlen von unter 30Hz betrieben wird.

9. Verfahren nach einem der Ansprüche 5 bis 8,
wobei eine Hochdruck-Teilturbine (4) über eine Hochdrucktrommel (12) im Abhitzekessel (11) mit Frischdampf versorgt wird und hinter der Hochdrucktrommel (12) ein Hochdruck-Druckhalteventil (29) angeordnet wird.

10. Verfahren nach Anspruch 9,
wobei das Hochdruck-Druckhalteventil (29) derart betrieben wird, dass der Druck im Abhitzekessel (11) auf einem festen Druck, der bei 40% - 100%, insbesondere 60% des Nenndrucks liegt, gehalten wird.

11. Verfahren nach einem der Ansprüche 5 bis 10,
wobei eine Mitteldruck-Teilturbine (5) über eine Mitteldrucktrommel (13) im Abhitzekessel (11) mit Mitteldruckdampf versorgt wird und hinter der Mitteldrucktrommel (13) ein Mitteldruck-Druckhalteventil (30) angeordnet ist.

12. Verfahren nach Anspruch 11,
wobei das Mitteldruck-Druckhalteventil (30) derart betrieben wird, dass der Druck im Abhitzekessel (11) auf einem festen Druck, der bei 40% - 100%, insbesondere 60% des Nenndrucks liegt, gehalten wird.

13. Verfahren nach Anspruch 9 oder 10,
wobei vor der Hochdruck-Teilturbine (4) ein Hochdruckventil (18, 19) angeordnet und dieses voll geöffnet wird.

14. Verfahren nach Anspruch 11, 12 oder 13,
wobei vor der Mitteldruck-Teilturbine (5) ein Mitteldruckventil (23, 24) angeordnet und dieses voll geöffnet wird.
